# EUROPEAN PATENT APPLICATION

(11) **EP 4 518 443 A1**
(43) Date of publication of application: **05.03.2025**
(21) Application number: 22940282.1
(22) Date of filing: 28.04.2022
(51) Int. Cl.: H04W 52/02, H04W 28/06

(54) **TERMINAL, BASE STATION, WIRELESS COMMUNICATION SYSTEM, AND WIRELESS COMMUNICATION METHOD**

(71) Applicant: NTT DOCOMO, INC., Tokyo 100-6150 (JP)
(72) Inventor: OHARA, Tomoya, Tokyo 100-6150 (JP); TAKAHASHI, Yuki, Tokyo 100-6150 (JP)
(74) Representative: Hoffmann Eitle
(86) International application number: PCT/JP2022/019449
(87) International publication number: WO 2023/210009

(57) **Abstract**

A terminal includes a communication unit that executes intermittent communication in which communication is executed in a periodic first section, and communication is not executed in a second section other than the first section; and a control unit that controls the intermittent communication. The intermittent communication includes at least one of first specific communication in which uplink communication is not limited and downlink communication is limited in the first section, and second specific communication in which downlink communication is not limited and uplink communication is limited in the first section.

## Description

### TECHNICAL FIELD

This disclosure relates to a terminal, a base station, a radio communication system and a radio communication method that execute intermittent communication.

### BACKGROUND ART

The 3rd Generation Partnership Project (3GPP) has provided specifications for the 5th generation mobile communication system (which is also called 5G, New Radio (NR) or Next Generation (NG)), and is further proceeding with the next generation specifications called Beyond 5G, 5G Evolution or 6G.

In the 3GPP, supporting applications of Extended Reality (XR) has been considered, and introduction of Connected mode Discontinuous Reception (CDRX) has been considered to reduce the power consumption related to XR (for example, Non-Patent Literature 1).

### CITATION LIST

### NON-PATENT LITERATURE

Non-patent Literature 1: "Revised SID: Study on XR Enhancements for NR," RP-220285, 3GPP TSG RAN Meeting #95e, 3GPP, March 2022

### SUMMARY OF THE INVENTION

In XR, it is assumed that traffic corresponding to frames per second (FPS) is periodically transmitted as DL (Downlink) transmission, and traffic such as posture information is periodically transmitted as UL (Uplink) transmission.

However, a period of DL transmission does not necessarily coincide with a period of UL transmission. For example, assuming a case when the period of DL transmission is longer than the period of UL transmission, UL transmission may not be properly executed if the active time duration of a CDRX is set in accordance with the period of DL transmission.

An object of the present invention is to provide a terminal, a base station, a radio communication system, and a radio communication method capable of properly executing DL transmission and UL transmission while reducing power consumption.

An aspect of the disclosure is a terminal including: a communication unit that executes intermittent communication in which communication is executed in a periodic first section, and communication is not executed in a second section other than the first section; and a control unit that controls the intermittent communication; in which the intermittent communication includes at least one of first specific communication in which uplink communication is not limited and downlink communication is limited in the first section, and second specific communication in which downlink communication is not limited and uplink communication is limited in the first section.

An aspect of the disclosure is a base station including: a communication unit that executes intermittent communication in which communication is executed in a periodic first section, and communication is not executed in a second section other than the first section; and a control unit that assumes that the terminal executes the intermittent communication; in which the intermittent communication includes at least one of first specific communication in which uplink communication is not limited and downlink communication is limited in the first section, and second specific communication in which downlink communication is not limited and uplink communication is limited in the first section.

A radio communication device including a terminal and a base station, the terminal including:
a communication unit that executes intermittent communication in which communication is executed in a periodic first section, and communication is not executed in a second section other than the first section; and
a control unit that controls the intermittent communication;
wherein the intermittent communication includes at least one of first specific communication in which uplink communication is not limited and downlink communication is limited in the first section, and second specific communication in which downlink communication is not limited and uplink communication is limited in the first section.

An aspect of the disclosure is a radio communication method including: a step of executing intermittent communication in which communication is executed in a periodic first section, and communication is not executed in a second section other than the first section; and a step of controlling the intermittent communication; in which the intermittent communication includes at least one of first specific communication in which uplink communication is not limited and downlink communication is limited in the first section, and second specific communication in which downlink communication is not limited and uplink communication is limited in the first section.

### BRIEF DESCRIPTION OF THE DRAWINGS

[FIG. 1] FIG. 1 is an overall schematic diagram of a radio communication system 10.
[FIG. 2] FIG. 2 is a diagram illustrating a frequency range used in the radio communication system 10.
[FIG. 3] FIG. 3 is a diagram illustrating a configuration example of a radio frame, a sub-frame and a slot used in the radio communication system 10.
[FIG. 4] FIG. 4 is a functional block diagram of the UE 200.
[FIG. 5] FIG. 5 is a functional block diagram of the gNB 100.
[FIG. 6] FIG. 6 is a diagram for explaining the problem.
[FIG. 7] FIG. 7 is a diagram for explaining a UL-only CDRX.
[FIG. 8] FIG. 8 is a diagram for explaining a DL-only CDRX.
[FIG. 9] FIG. 9 is a diagram for explaining a combination of two or more CDRXs.
[FIG. 10] FIG. 10 illustrates an example of the hardware configuration of the gNB 100 and the UE 200.
[FIG. 11] FIG. 11 illustrates a configuration example of a vehicle 2001.

### DESCRIPTION OF EMBODIMENTS

Hereinafter, embodiments will be described with reference to the drawings. It should be noted that the same functions and configurations are denoted by the same or similar reference signs, and the description thereof will be omitted, as appropriate.

### Embodiments

### (1) Overall Schematic Configuration of Radio Communication System

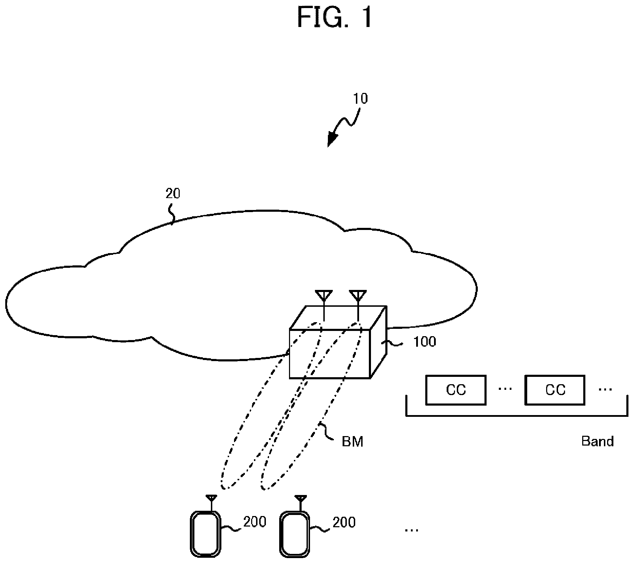

FIG. 1 is an overall schematic configuration diagram of a radio communication system 10 according to an embodiment. The radio communication system 10 is a radio communication system in accordance with 5G New Radio (NR) and includes a Next-Generation Radio Access Network 20 (hereinafter referred to as NG-RAN 20) and a terminal 200 (hereinafter referred to as a UE (User Equipment) 200).

The radio communication system 10 may be a radio communication system in accordance with a system called Beyond 5G, 5G Evolution or 6G.

The NG-RAN 20 includes a base station 100 (hereinafter referred to as a gNB 100). A specific configuration of the radio communication system 10 including the number of gNBs 100 and UEs 200 is not limited to the example illustrated in FIG. 1.

In practice, the NG-RAN 20 includes a plurality of NG-RAN Nodes, specifically gNBs (or ng-eNBs), and is connected to a core network (5GC, not illustrated) in accordance with 5G. The NG-RAN 20 and the 5GC may be simply expressed as a "network."

The gNB 100 is a radio base station in accordance with 5G and executes radio communication with the UE 200 in accordance with 5G. The gNB 100 and the UE 200 can support Massive MIMO (Multiple-Input Multiple-Output) that generates a beam BM with a higher directivity by controlling radio signals transmitted from a plurality of antenna elements, Carrier Aggregation (CA) that uses a plurality of Component Carriers (CC) bundled together, and Dual Connectivity (DC) that simultaneously communicates with two or more transport blocks between the UE and each of two NG-RAN nodes.

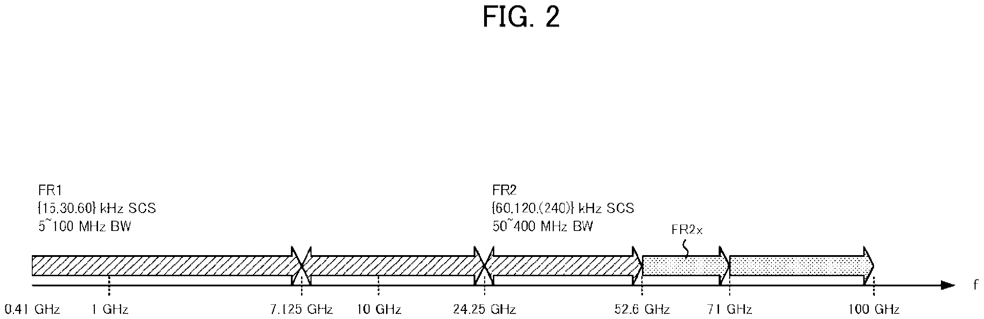

The radio communication system 10 supports a plurality of frequency ranges (FR). FIG. 2 illustrates frequency ranges used in the radio communication system 10.

As illustrated in FIG. 2, the radio communication system 10 supports FR1 and FR2. The frequency bands of each FR are as follows.

- FR1: 410 MHz to 7.125 GHz
- FR2: 24.25 GHz to 52.6 GHz

FR1 uses Sub-Carrier Spacing (SCS) of 15, 30 or 60 kHz, and may use bandwidth (BW) of 5 to 100 MHz. FR2 has a higher frequency than FR1, and may use SCS of 60 or 120 kHz (240 kHz may be included), and may use bandwidth (BW) of 50 to 400 MHz.

SCS may be interpreted as a numerology. The numerology is defined in 3GPP TS38.300, and corresponds to one subcarrier spacing in a frequency domain.

Further, the radio communication system 10 supports a frequency band higher than the frequency band of the FR2. More specifically, the radio communication system 10 supports a frequency band exceeding 52.6 GHz and up to 71 GHz or 114.25 GHz. Such a high frequency band may be referred to as "FR2x" for convenience.

In order to solve the problem that effect of phase noise increases in a high frequency band, Cyclic Prefix-Orthogonal Frequency Division Multiplexing (CP-OFDM)/Discrete Fourier Transform-Spread (DFT-S-OFDM) with a larger Sub-Carrier Spacing (SCS) may be applied when a band exceeding 52.6 GHz is used.

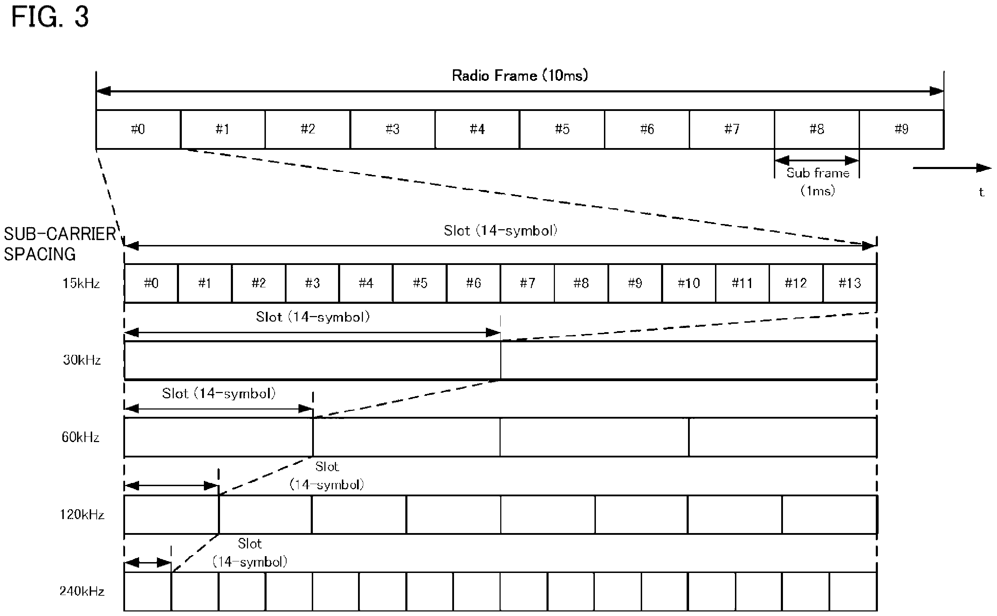

FIG. 3 illustrates an example of a configuration of a radio frame, a subframe, and a slot used in the radio communication system 10.

As illustrated in FIG. 3, one slot is configured by 14 symbols, and the larger (wider) the SCS, the shorter the symbol duration (and slot duration). The SCS is not limited to the interval (frequency) illustrated in FIG. 3. For example, 480 kHz or 960 kHz may be used.

The number of symbols that configures one slot may not necessarily be 14 symbols (for example, 28 symbols or 56 symbols). Furthermore, the number of slots per subframe may be different depending on the SCS.

Note that a time direction (t) illustrated in FIG. 3 may be called a time domain, a symbol duration, or a symbol time. A frequency direction may be called a frequency domain, a resource block, a subcarrier, or a bandwidth part (BWP).

DMRS is a type of reference signal and is prepared for various channels. Herein, unless otherwise specified, DMRS for a downlink data channel, specifically, Physical Downlink Shared Channel (PDSCH) may be interpreted as DMRS. However, DMRS for an uplink data channel, specifically, Physical Uplink Shared Channel (PUSCH) may be interpreted as DMRS for PDSCH.

DMRS may be used for channel estimation in the UE 200 as part of a device, for example, coherent demodulation. DMRS may be present only in the resource block (RB) used for PDSCH transmission.

DMRS may have multiple mapping types. Specifically, DMRS may have Mapping Type A and Mapping Type B. In Mapping Type A, first DMRS is placed in a second or third symbol of the slot. In Mapping Type A, the DMRS may be mapped with reference to slot boundaries regardless of where in the slot the actual data transmission begins. The reason for placing the first DMRS in the second or third symbol of the slot may be interpreted as placing the first DMRS after control resource sets (CORESET).

For Mapping Type B, the first DMRS may be placed in a first symbol of the data allocation. That is, the position of the DMRS is not given relative to the slot boundaries, but may be given relative to the location in which the data is located.

DMRS may also have multiple types (Type) . Specifically, DMRS may have Type 1 and Type 2. Type 1 and Type 2 differ in the maximum number of mapping and orthogonal reference signals in the frequency domain. Type 1 is single-symbol DMRS that can output up to four orthogonal signals. Type 2 is double-symbol DMRS that can output up to eight orthogonal signals.

### (2) Functional Block Configuration of the Radio Communication System

Next, the functional block configuration of the radio communication system 10 will be described.

First, the functional block configuration of the UE 200 will be described.

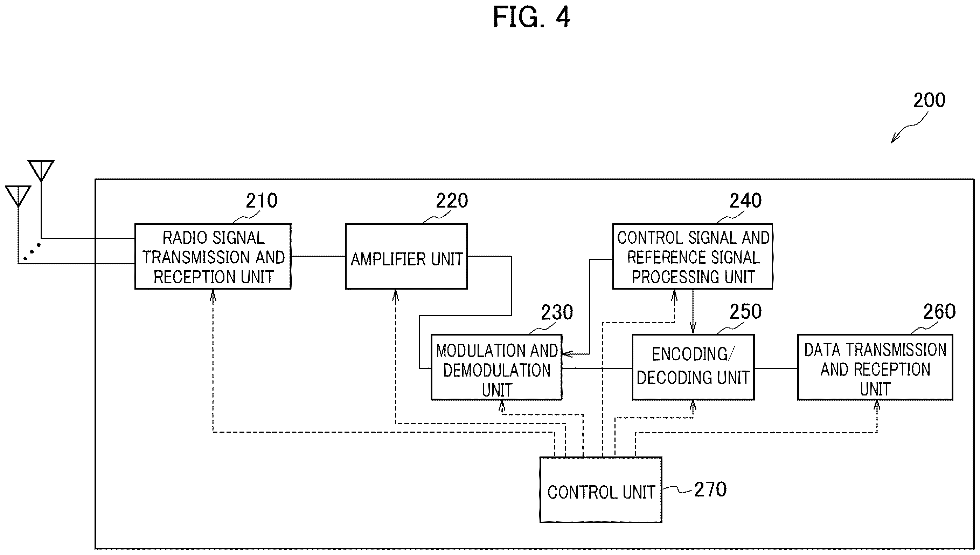

FIG. 4 is a functional block configuration diagram of the UE 200. As illustrated in FIG. 4, the UE 200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

The radio signal transmission and reception unit 210 transmits and receives radio signals in accordance with NR. The radio signal transmission and reception unit 210 supports the Massive MIMO, the CA that uses a plurality of the CCs bundled together, and the DC that simultaneously executes communication between the UE and each of the two NG-RAN Nodes.

The amplifier unit 220 is configured by a Power Amplifier (PA)/a Low Noise Amplifier (LNA), or the like. The amplifier unit 220 amplifies the signal output from the modulation and demodulation unit 230 to a predetermined power level. Further, the amplifier unit 220 amplifies an RF signal output from the radio signal transmission and reception unit 210.

The modulation and demodulation unit 230 executes data modulation/demodulation, transmission power setting, resource block allocation, or the like for each predetermined communication destination (gNB 100 or another gNB). In the modulation and demodulation unit 230, Cyclic Prefix-Orthogonal Frequency Division Multiplexing (CP-OFDM)/Discrete Fourier Transform-Spread (DFT-S-OFDM) may be applied. The DFT-S-OFDM may be used not only for the uplink (UL) but also for the downlink (DL).

The control signal and reference signal processing unit 240 executes processing related to various control signals transmitted and received by the UE 200, and processing related to various reference signals transmitted and received by the UE 200.

Specifically, the control signal and reference signal processing unit 240 receives various control signals transmitted from the gNB 100 via a predetermined control channel, for example, control signals of a radio resource control layer (RRC). The control signal and reference signal processing unit 240 transmits various control signals to the gNB 100 via a predetermined control channel.

The control signal and reference signal processing unit 240 executes processing using a reference signal (RS) such as a Demodulation Reference Signal (DMRS) and a Phase Tracking Reference Signal (PTRS).

The DMRS is a reference signal (pilot signal) known between the base station and the terminal for each terminal for estimating a fading channel to be used for data demodulation. The PTRS is a reference signal for each terminal for estimating phase noise, which is a problem in a high frequency band.

In addition to the DMRS and the PTRS, the reference signal may include a Channel State Information-Reference Signal (CSI-RS), a Sounding Reference Signal (SRS), and a Positioning Reference Signal (PRS) for position information.

The channel also includes a control channel and a data channel. The control channel includes Physical Downlink Control Channel (PDCCH), Physical Uplink Control Channel (PUCCH), Random Access Channel (RACH), Downlink Control Information (DCI) including Random Access Radio Network Temporary Identifier (RA-RNTI), and Physical Broadcast Channel (PBCH) .

The data channel further includes Physical Downlink Shared Channel (PDSCH), Physical Uplink Shared Channel (PUSCH), or the like. The data means data transmitted via the data channel. The data channel may be read as a shared channel.

Here, the control signal and reference signal processing unit 240 may receive Downlink Control Information (DCI) . The DCI includes fields for storing DCI Formats, Carrier indicator (CI), BWP indicator, Frequency Domain Resource Assignment (FDRA), Time Domain Resource Assignment (TDRA), Modulation and Coding Scheme (MCS), HARQ Process Number (HPN), New Data Indicator (NDI), Redundancy Version (RV), or the like as existing fields.

A value stored in a DCI Format field is an information element that specifies the format of the DCI. A value stored in a CI field is an information element that specifies the CC to which the DCI is applied. A value stored in a BWP indicator field is an information element that specifies the BWP to which the DCI is applied. The BWP that can be specified by the BWP indicator is set by the information element (BandwidthPart-Config) included in a RRC message. A value stored in a FDRA field is an information element that specifies a frequency domain resource to which the DCI is applied. The frequency domain resource is specified by the value stored in the FDRA field and the information element (RA Type) included in the RRC message. A value stored in a TDRA field is an information element that specifies a time domain resource to which the DCI is applied. The time domain resource is specified by a value stored in the TDRA field and an information element (pdsch-TimeDomainAllocationList, pusch-TimeDomainAllocationList) included in the RRC message. The time domain resource may be specified by a value stored in the TDRA field and a default table. A value stored in an MCS field is an information element that specifies the MCS to which the DCI is applied. The MCS is specified by the value stored in the MCS and an MCS table. The MCS table may be specified by an RRC message or by RNTI scrambling. A value stored in an HPN field is an information element that specifies a HARQ Process to which the DCI is applied. A value stored in the NDI is an information element that specifies whether the data to which the DCI is applied is initial transmission data. A value stored in an RV field is an information element that specifies the redundancy of the data to which the DCI is applied.

The encoding/decoding unit 250 executes data division/concatenation, channel coding/decoding, and the like for each predetermined communication destination (gNB 100 or another gNB).

Specifically, the encoding/decoding unit 250 divides the data output from the data transmission and reception unit 260 into predetermined sizes, and executes channel coding on the divided data. The encoding/decoding unit 250 decodes the data output from the modulation and demodulation unit 230 and concatenates the decoded data.

The data transmission and reception unit 260 transmits and receives Protocol Data Units (PDUs) and Service Data Units (SDUs). Specifically, the data transmission and reception unit 260 assembles/disassembles PDUs/SDUs in a plurality of layers (such as media access control layer (MAC), radio link control layer (RLC), and packet data convergence protocol layer (PDCP)). The data transmission and reception unit 260 executes data error correction and retransmission control based on Hybrid Automatic Repeat Request (HARQ).

In the embodiment, the data transmission and reception unit 260 may configure a communication unit that executes intermittent communication in which communication is executed in a periodic first section, and communication is not executed in a second section other than the first section. The communication unit may include a control signal and reference signal processing unit 240.

The intermittent communication may be referred to as Connected mode Discontinuous Reception (CDRX). The CDRX may include an existing CDRX or a CDRX introduced for Extended Reality (XR). The first section may be called an active section, and the second section may be called a sleep section. The first section may be called an on-duration, and the second section may be called an off-duration. The first section may be a section in which an on-duration timer is running, and the second section may be a section in which the on-duration timer is running.

The control unit 270 controls each functional block that configures the UE 200. In the embodiment, the control unit 270 configures a control unit that controls intermittent communication. The intermittent communication includes at least one of first specific communication in which uplink communication (hereinafter referred to as UL communication) is not limited and downlink communication (hereinafter referred to as DL communication) is limited in the first section, and second specific communication in which DL communication is not limited and UL communication is limited in the first section. Although not particularly limited, from the viewpoint of the UE 200, UL communication may be referred to as UL transmission, and DL communication may be referred to as DL reception. Details of the first specific communication and the second specific communication will be described later.

Second, the functional block configuration of the gNB 100 will be described.

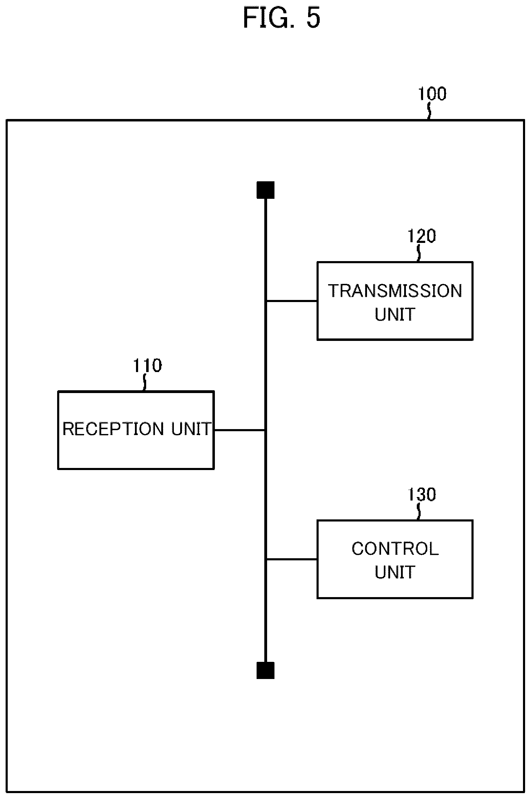

FIG. 5 is a functional block configuration diagram of the gNB 100. As illustrated in FIG. 5, the gNB 100 includes a receiving unit 110, a transmitting unit 120, and a controlling unit 130.

The receiving unit 110 receives various signals from the UE 200. The receiving unit 110 may receive UL signals via PUCCH or PUSCH.

The transmitting unit 120 transmits various signals to the UE 200. The transmitting unit 120 may transmit DL signals via PDCCH or PDSCH.

In the embodiment, the receiving unit 110 and the transmitting unit 120 configure a communication unit that executes intermittent communication in which communication is executed in a periodic first section, and communication is not executed in a second section other than the first section.

The control unit 130 controls the gNB 100. In the embodiment, the control unit 130 configures a control unit that assumes that the UE 200 executes intermittent communication. The intermittent communication includes the first specific communication and the second specific communication.

### (3) Problems

Next, problems of the embodiment will be described. Hereinafter, the first section will be referred to as an active section, and the second section will be referred to as a sleep section. Here, traffic related to Extended Reality (XR) will be described as an example.

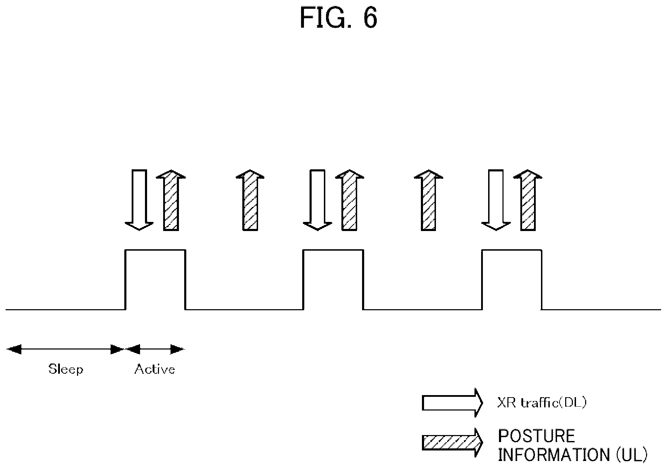

As illustrated in FIG. 6, in XR, it is assumed that traffic corresponding to frames per second (FPS) is periodically transmitted as Downlink (DL) transmission, and traffic such as posture information is periodically transmitted as Uplink (UL) transmission.

The period of DL transmission does not necessarily coincide with the period of UL transmission, and a case in which the period of DL transmission is longer than the period of UL transmission is assumed. In such a case, UL transmission cannot be properly executed if the active section is set in accordance with the period of DL transmission.

If the active section is set in accordance with the period of UL transmission, the frequency of the active section for DL transmission is excessive, and the power consumption of the UE 200 increases.

Under such a background, the inventors, as a result of careful study, have found that by introducing the first specific communication and the second specific communication described above, DL transmission and UL transmission can be properly executed while reducing the power consumption of the UE 200.

### (4) Operation Example

Next, a problem of the embodiment will be described. Hereinafter, the first section will be referred to as an active section, and the second section will be referred to as a sleep section.

### (4.1) First Specific Communication

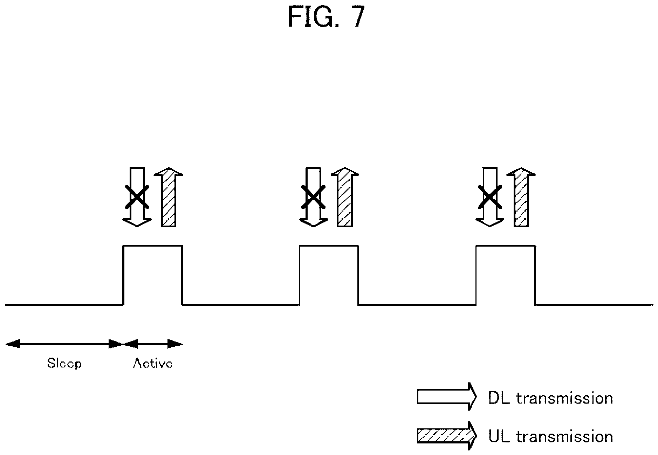

As illustrated in FIG. 7, the first specific communication is CDRX in which UL communication is not limited and DL communication is limited in the active section. The first specific communication may be referred to as a UL-only CDRX.

For example, as the UL communication that can be executed in the active section, at least one of the following UL transmissions may be executed.

- Transmission of PUSCH
- Transmission of PUCCH
- Transmission of configured grant PUSCH
- Transmission of SRS (periodic SRS, semi-persistent SRS, and aperiodic SRS)
- Transmission of CSI (periodic CSI, semi-persistent CSI, aperiodic CSI)
- Transmission of UCI
- Transmission related to random access (such as PRACH, Msg. 3, and Msg. A)

In principle, neither UL transmission nor DL transmission can be executed in the sleep section. However, reception of a specific DCI format (for example, DCI format 2_6) may be allowed in the sleep section.

In a UL-only CDRX, DL communication is limited, but specific DL communication may be allowed. As the specific DL communication, the following options may be considered. The specific DL communication may be notified from the gNB 100 or predefined in the radio communication system 10.

In Option 1, in a case when UL communication related to random access (such as PRACH, Msg. 3, and Msg. A) is executed, the specific DL communication may include DL reception related to random access (such as Msg.2, Msg.4, and Msg. B). The DL communication related to random access may be temporarily allowed after UL transmission related to random access. The time period during which DL communication related to random access is allowed may be notified from the gNB 100 or predefined in the radio communication system 10.

In option 2, the specific DL communication may include DL reception of PDCCH (DCI) in a case when the UL transmission is executed. Monitoring the PDCCH (DCI) may be temporarily allowed after the UL transmission. The period of time during which monitoring of the PDCCH (DCI) is allowed may be notified from the gNB 100 or may be predefined in the radio communication system 10.

In Option 3, the specific DL communication may include monitoring/reception (for example, monitoring/reception of DCI or the like that performs dynamic scheduling of PUSCH) of the PDCCH (DCI) to instruct/notify regarding UL transmission. For example, only a DCI format (for example, DCI format 0_0, DCI format 0_1, DCI format 0_2, or the like) capable of scheduling UL transmission may be monitored/received.

Here, the active section of the UL-only CDRX may be set or notified from the active section of the existing CDRX. The active section of the existing CDRX is an active section in which both UL communication and DL communication are not limited.

### (4.2) Second Specific Communication

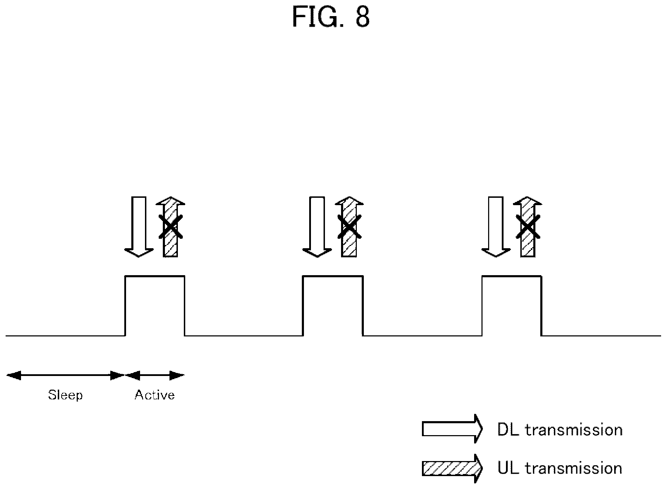

As illustrated in FIG. 8, the second specific communication is CDRX in which DL communication is not limited and UL communication is limited in the active section. The second specific communication may be referred to as a DL-only CDRX.

For example, at least one of UL receptions shown below may be executed as DL communication that may be executed in the active section.

- Monitoring/reception of PDCCH
- Reception of PDSCH
- Reception of Semi-Persistent Scheduling (SPS) PDSCH
- Reception of various reference signals (such as CSI-RS and SSB)
- Reception related to random access (such as Msg.2, Msg.4, and Msg. B)

When various reference signals (such as CSI-RS and SSB) are received, measurements on various reference signals (such as CSI-RS and SSB) may be performed.

Note that, in principle, both UL transmission and DL transmission cannot be executed in the sleep section. However, reception of a specific DCI format (for example, DCI format2_6) may be allowed in the sleep section.

In a DL-only CDRX, UL communication is limited, but specific UL communication may be allowed. As the specific UL communication, the following options may be considered. The specific UL communication may be notified from the gNB 100 or may be predefined in the radio communication system 10.

In Option 1, the specific UL communication may include UL transmission of an ACK corresponding to the DL reception, in a case when DL reception is executed.

In Option 2, the specific UL communication may include UL transmission of a report on the measurement (CSI Report, L1 RSRP Report, and RRM Measurement Report), in a case when the reception of various reference signals (CSI-RS, SSB, etc.) is executed.

In Option 3, the specific UL communication may include UL transmission related to random access (such as PRACH, Msg. 3, and Msg. A), in a case when communication related to random access is executed.

Here, the active section of the DL-only CDRX may be set or notified from the active section of the existing CDRX. Note that the active section of the existing CDRX is an active section in which both UL communication and DL communication are not limited.

### (4.3) Combination of Two or More CDRXs

For a given carrier, two or more CDRXs selected from the UL-only CDRX, the DL-only CDRX, and the existing CDRX may be available.

As described above, a UL-only CDRX is a CDRX in which UL communication is not limited and DL communication is limited in the active section (see FIG. 7). A DL-only CDRX is a CDRX in which DL communication is not limited and UL communication is limited in the active section (see FIG. 8). The existing CDRX is a CDRX in which both UL communication and DL communication are not limited in the active section.

Under this assumption, two or more CDRXs may be set according to the following options.

In Option 1, parameters for two or more CDRXs may be set separately for each of the two or more CDRXs. Parameters for the two or more CDRXs may be set in common for the two or more CDRXs. For example, CDRX Cycle and on-duration timer may be set separately for each of the two or more CDRXs, and other parameters may be set in common for the two or more CDRXs.

In Option 2, the two or more CDRXs may be individually set for each of the two or more carriers. The combination of the CDRXs set for each of the two or more carriers may be different from each other.

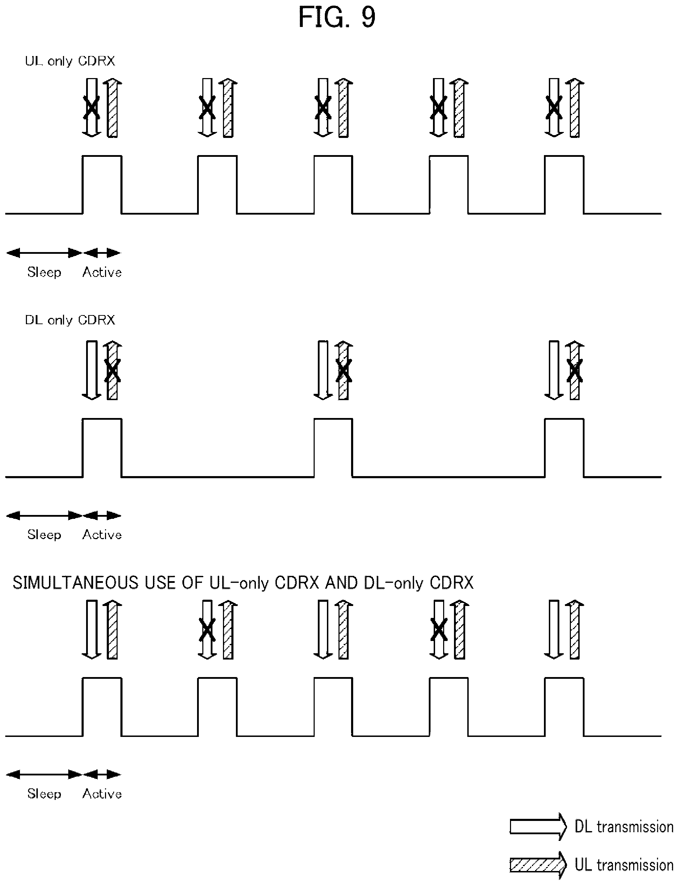

In Option 3, when the active sections of each of the two or more CDRXs overlap in time, communication allowed by any one of the two or more CDRXs may be executed in the active section overlapping in time. For example, as illustrated in FIG. 9, when a UL-only CDRX and a DL-only CDRX are set, the period and length of the active section of the UL-only CDRX and the active section of the DL-only CDRX may be separately set, and both UL transmission and DL reception may be executed in a portion in which the active section of the UL-only CDRX and the active section of the DL-only CDRX overlap in time.

In option 4, two or more existing CDRXs may be combined. Parameters related to the two or more existing CDRXs may be separately set for each of the two or more existing CDRXs. The parameters related to the two or more existing CDRXs may be set in common for the two or more existing CDRXs. For example, the CDRX Cycle and the on-duration timer may be set separately for each of the two or more existing CDRXs, and the other parameters may be set in common for the two or more existing CDRXs.

For example, assuming a case when the period of DL transmission is longer than the period of UL transmission, the existing CDRX for DL transmission may be set with a CDRX Cycle longer than the CDRX Cycle of the existing CDRX for UL transmission. On the other hand, since the jitter of UL transmission is assumed to be smaller than the jitter of DL transmission, the existing CDRX for UL transmission may be set with an active section shorter than the active section for DL transmission. According to such a configuration, even if the UL-only CDRX and the DL-only CDRX are not used, the appropriate two or more existing CDRXs can be set for each of DL transmission and UL transmission. Note that at least one of the two or more existing CDRXs may be replaced with at least one of the UL-only CDRX and the DL-only CDRX.

### (5) Operation and Effect

In the embodiments, the UE 200 corresponds to at least one of the UL-only CDRX (see FIG. 7) in which UL communication is not limited in the active section and DL communication is limited in the active section, and DL-only CDRX (see FIG. 8) in which DL communication is not limited and UL communication is limited in the active section. According to such a configuration, even when a case is assumed, in which the periods of DL transmission and UL transmission are different, the introduction of the UL-only CDRX and the DL-only CDRX can properly execute DL transmission and UL transmission while reducing the power consumption of the UE 200.

### (6) Other Embodiments

Although the contents of the present invention have been described above with reference to the embodiments, it will be obvious to those skilled in the art that the present invention is not limited to these descriptions and that various modifications and improvements are possible.

Although not specifically mentioned in the above disclosure, at least one CDRX of UL-only CDRX and DL-only CDRX may be applied to communications related to XR or other than XR. For example, at least one CDRX of UL-only CDRX and DL-only CDRX may be applied to applications in which UL or DL communications occur periodically.

Although not specifically mentioned in the disclosure above, the following UE Capability may be defined. The following UE Capability may be reported from UE 200 to gNB 100.

The UE Capability may include an information element indicating whether or not it has the capability to support a UL-only CDRX. The UE Capability may include an information element indicating whether or not it has the capability to support any one or more of the options for a UL-only CDRX.

The UE Capability may include an information element indicating whether or not it has the capability to support the DL-only CDRX. The UE Capability may include an information element indicating whether or not it has the capability to support any one or more of the options for the DL-only CDRX.

The UE Capability may include an information element indicating whether or not it has the capability to support a combination of two or more CDRX. The UE Capability may include an information element indicating whether or not it has the capability to support any one or more of the options for a combination of the two or more CDRXs.

In the above disclosure, terms such as configure, activate, update, indicate, enable, specify, and select may be read interchangeably. Similarly, terms such as link, associate, correspond, and map may be read interchangeably, and terms such as allocate, assign, monitor, and map may be read interchangeably.

In addition, terms such as specific, dedicated, UE-specific, and UE-dedicated may be read interchangeably. Similarly, terms such as common, shared, group-common, UE-common, and UE-shared may be read interchangeably.

The block diagram (FIGs. 4 and 5) used in the description of the above-described embodiment illustrates blocks in units of functions. Those functional blocks (components) can be realized by any combination of at least one of hardware and software. A realization method for each functional block is not particularly limited. That is, each functional block may be realized by using one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that makes a transmitting function work may be called a transmitting unit or a transmitter. For any of the above, as described above, the realization method is not particularly limited.

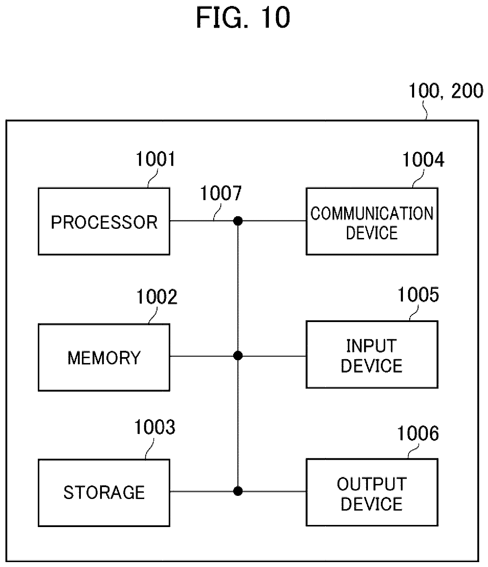

Further, the above-described gNB 100 and UE 200 (the device) may function as a computer that performs processing of a radio communication method of the present disclosure. FIG. 10 is a diagram illustrating an example of a hardware configuration of the device. As illustrated in FIG. 10, the device may be configured as a computer device including a processor 1001, a memory 1002, a storage 1003, a communication device 1004, an input device 1005, an output device 1006, a bus 1007, and the like.

Furthermore, in the following description, the term "device" can be read as meaning circuit, device, unit, or the like. The hardware configuration of the device may include one or more devices illustrated in the figure or may not include some of the devices.

Each of the functional blocks of the device (FIG. 4) is implemented by means of any of hardware elements of the computer device or a combination of the hardware elements.

Each function in the device is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 operates, for example, an operating system to control the entire computer. The processor 1001 may be configured with a central processing unit (CPU) including interfaces with peripheral devices, control devices, arithmetic devices, registers, and the like.

Moreover, the processor 1001 reads a program (program code), a software module, data, and the like from at least one of the storage 1003 and the communication device 1004 into the memory 1002, and executes various processes according to these. As the program, a program causing the computer to execute at least part of the operation described in the above embodiment is used. Alternatively, various processes described above may be executed by one processor 1001 or may be executed simultaneously or sequentially by two or more processors 1001. The processor 1001 may be implemented by using one or more chips. Alternatively, the program may be transmitted from a network via a telecommunication line.

The memory 1002 is a computer readable recording medium and may be configured, for example, with at least one of a Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), and the like. The memory 1002 may store therein programs (program codes), software modules, and the like that can execute the method according to one embodiment of the present disclosure.

The storage 1003 is a computer readable recording medium. Examples of the storage 1003 include at least one of an optical disk such as Compact Disc ROM (CD-ROM), a hard disk drive, a flexible disk, a magneto-optical disk (for example, a compact disk, a digital versatile disk, Blu-ray (registered trademark) disk), a smart card, a flash memory (for example, a card, a stick, a key drive), a floppy (registered trademark) disk, a magnetic strip, and the like. The storage 1003 may be referred to as an auxiliary storage device. The recording medium may be, for example, a database including at least one of the memory 1002 and the storage 1003, a server, or other appropriate medium.

The communication device 1004 is hardware (transmission/reception device) capable of performing communication between computers via at least one of a wired network and a wireless network. The communication device 1004 is also referred to as, for example, a network device, a network controller, a network card, a communication module, and the like.

The communication device 1004 may include a highfrequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may have an integrated configuration (for example, a touch screen).

Also, the respective devices such as the processor 1001 and the memory 1002 are connected to each other with the bus 1007 for communicating information. The bus 1007 may be constituted by a single bus or may be constituted by different buses for each device-to-device.

Further, the device may be configured to include hardware such as a microprocessor, a Digital Signal Processor (DSP), an Application Specific Integrated Circuit (ASIC), a Programmable Logic Device (PLD), and a Field Programmable Gate Array (FPGA). Some or all of these functional blocks may be realized by means of this hardware. For example, the processor 1001 may be implemented by using at least one of the above-described items of hardware.

Further, notification of information is not limited to that in the aspect/embodiment described in the present disclosure, and may be performed by using other methods. For example, notification of information may be performed by physical layer signaling (for example, Downlink Control Information (DCI), Uplink Control Information (UCI), higher layer signaling (for example, RRC signaling, Medium Access Control (MAC) signaling), broadcast information (Master Information Block (MIB), System Information Block (SIB)), other signals, or a combination thereof. The RRC signaling may also be referred to as an RRC message, for example, or may be an RRC Connection Setup message, an RRC Connection Reconfiguration message, or the like.

Each aspect/embodiment described in the present disclosure may be applied to at least one of Long Term Evolution (LTE), LTE-Advanced (LTE-A), SUPER 3G, IMT-Advanced, the 4th generation mobile communication system (4G), the 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a system using any other appropriate system, and a next-generation system that is expanded based on these. Further, a plurality of systems may be combined (for example, a combination of at least one of LTE and LTE-A with 5G) and applied.

The order of the processing procedures, sequences, flowcharts, and the like of each aspect/embodiment described in the present disclosure may be exchanged as long as there is no contradiction. For example, the methods described in the present disclosure present the elements of the various steps by using an exemplary order and are not limited to the presented specific order.

The specific operation that is performed by a base station in the present disclosure may be performed by its upper node in some cases. In a network constituted by one or more network nodes having a base station, it is obvious that the various operations performed for communication with the terminal may be performed by at least one of the base station and other network nodes other than the base station (for example, an MME, an S-GW, and the like may be considered, but there is not limited thereto). In the above, an example in which there is one network node other than the base station is explained; however, a combination of a plurality of other network nodes (for example, an MME and an S-GW) may be used.

Information and signals (information and the like) can be output from a higher layer (or lower layer) to a lower layer (or higher layer). These may be input and output via a plurality of network nodes.

The input/output information may be stored in a specific location (for example, a memory) or may be managed in a management table. The information to be input/output can be overwritten, updated, or added. The information may be deleted after outputting. The inputted information may be transmitted to another device.

The determination may be made by using a value (0 or 1) represented by one bit, by truth-value (Boolean: true or false), or by comparison of numerical values (for example, comparison with a predetermined value).

Each of the aspects/embodiment described in the present disclosure may be used separately or in combination, or may be switched in accordance with the execution. In addition, notification of predetermined information (for example, notification of "is X") is not limited to being performed explicitly, and it may be performed implicitly (for example, without notifying the predetermined information).

Regardless of being referred to as software, firmware, middleware, microcode, hardware description language, or some other name, software should be interpreted broadly to mean instructions, an instruction set, code, a code segment, program code, a program, a subprogram, a software module, an application, a software application, a software package, a routine, a subroutine, an object, an executable file, an execution thread, a procedure, a function, and the like.

Further, software, instruction, information, and the like may be transmitted and received via a transmission medium. For example, when software is transmitted from a website, a server, or another remote source by using at least one of a wired technology (a coaxial cable, an optical fiber cable, a twisted pair cable, a Digital Subscriber Line (DSL), or the like) and a wireless technology (infrared light, microwave, or the like), then at least one of these wired and wireless technologies is included within the definition of the transmission medium.

Information, signals, or the like described in the present disclosure may be represented by using any of a variety of different technologies. For example, data, an instruction, a command, information, a signal, a bit, a symbol, a chip, or the like that may be mentioned throughout the above description may be represented by a voltage, a current, an electromagnetic wave, a magnetic field or magnetic particles, an optical field or photons, or any combination thereof.

It should be noted that the terms described in the present disclosure and terms necessary for understanding the present disclosure may be replaced with terms having the same or similar meanings. For example, at least one of a channel and a symbol may be a signal (signaling). A signal may also be a message. Further, a Component Carrier (CC) may be referred to as a carrier frequency, a cell, a frequency carrier, or the like.

The terms "system" and "network" used in the present disclosure can be used interchangeably.

Furthermore, information, parameters, and the like described in the present disclosure may be represented by an absolute value, may be represented by a relative value from a predetermined value, or may be represented by corresponding other information. For example, a radio resource may be indicated using an index.

Names used for the above parameters are not restrictive names in any respect. In addition, formulas and the like using these parameters may be different from those explicitly disclosed in the present disclosure. Since the various channels (for example, a PUCCH, a PDCCH, or the like) and information elements can be identified by any suitable names, the various names allocated to these various channels and information elements shall not be restricted in any way.

In the present disclosure, the terms such as "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. A base station may also be referred to with a term such as a macro cell, a small cell, a femtocell, or a pico cell.

A base station can accommodate one or more (for example, three) cells (also referred to as sectors). In a configuration in which a base station accommodates a plurality of cells, the entire coverage area of the base station can be divided into a plurality of smaller areas. In each of the smaller areas, a communication service can be provided by a base station subsystem (for example, a small base station for indoor use (remote radio head: RRH)).

The term "cell" or "sector" refers to a part or all of the coverage area of at least one of a base station and a base station subsystem that performs a communication service in this coverage.

In the present disclosure, a base station transmitting information to a terminal may be interpreted as the base station instructing the terminal to control or operate based on the information.

In the present disclosure, the terms such as "mobile station (Mobile Station: MS)", "user terminal", "user equipment (User Equipment: UE)", and "terminal" can be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms by those skilled in the art.

At least one of a base station and a mobile station may be called a transmitting device, a receiving device, a communication device, or the like. Note that at least one of a base station and a mobile station may be a device mounted on a moving body, a moving body itself, or the like. The moving body may be a vehicle (for example, a car, an airplane, or the like), an unmanned moving body (a drone, a self-driving car, or the like), or a robot (manned type or unmanned type). At least one of a base station and a mobile station also includes a device that does not necessarily move during the communication operation. For example, at least one of a base station and a mobile station may be an Internet of Things (IoT) device such as a sensor.

Also, a base station in the present disclosure may be read as meaning a mobile station (user terminal, hereinafter, the same). For example, each aspect/embodiment of the present disclosure may be applied to a configuration in which communication between a base station and a mobile station is replaced with communication between a plurality of mobile stations (which may be called Device-to-Device (D2D), Vehicle-to-Everything (V2X), or the like). In this case, the mobile station may have the function of a base station. In addition, words such as "uplink" and "downlink" may also be read as meaning words corresponding to inter-terminal communication (for example, "side"). For example, an uplink channel, a downlink channel, or the like may be read as meaning a side channel.

Similarly, the mobile station in the present disclosure may be read as meaning a base station. In this case, the base station may have the function of the mobile station.

A radio frame may be composed of one or more frames in the time domain. Each of the one or more frames in the time domain may be referred to as a subframe.

A subframe may be further composed of one or more slots in the time domain. The subframe may be a fixed time length (for example, 1 ms) independent of the numerology.

The numerology may be a communication parameter applied to at least one of transmission and reception of a certain signal or channel. The numerology may indicate at least one of, for example, subcarrier spacing (SCS), bandwidth, symbol length, cyclic prefix length, transmission time interval (TTI), the number of symbols per TTI, radio frame configuration, a specific filtering process performed by a transceiver in the frequency domain, a specific windowing process performed by a transceiver in the time domain, and the like.

A slot may be composed of one or more symbols (Orthogonal Frequency Division Multiplexing (OFDM)) symbols, Single Carrier Frequency Division Multiple Access (SC-FDMA) symbols, and the like) in the time domain. A slot may be a unit of time based on the numerology.

A slot may include a plurality of minislots. Each minislot may be composed of one or more symbols in the time domain. A minislot may be called a subslot. A minislot may be composed of fewer symbols than slots. A PDSCH (or PUSCH) transmitted in time units greater than the minislot may be referred to as a PDSCH (or PUSCH) mapping type A. A PDSCH (or PUSCH) transmitted using a minislot may be referred to as a PDSCH (or PUSCH) mapping type B.

Each of a radio frame, subframe, slot, minislot, and symbol represents a time unit for transmitting a signal. A radio frame, subframe, slot, minislot, and symbol may have respectively different names corresponding to them.

For example, one subframe may be called a transmission time interval (TTI), a plurality of consecutive subframes may be called a TTI, and one slot or one minislot may be called a TTI. That is, at least one of the subframe and TTI may be a subframe (1 ms) in the existing LTE, a period shorter than 1 ms (for example, 1 to 13 symbols), or a period longer than 1 ms. Note that, a unit representing TTI may be called a slot, a minislot, or the like instead of a subframe.

Here, a TTI refers to the minimum time unit of scheduling in radio communication, for example. For example, in the LTE system, the base station performs scheduling for allocating radio resources (frequency bandwidth, transmission power, and the like that can be used in each user terminal) to each user terminal in units of TTI. The definition of TTI is not limited to this.

A TTI may be a transmission time unit such as a channel-coded data packet (transport block), a code block, or a code word, or may be a processing unit such as scheduling or link adaptation. When a TTI is given, a time interval (for example, the number of symbols) in which a transport block, a code block, a code word, and the like are actually mapped may be shorter than TTI.

When one slot or one minislot is called a TTI, one or more TTIs (that is, one or more slots or one or more minislots) may be the minimum time unit of the scheduling. The number of slots (minislot number) constituting the minimum time unit of the scheduling may be controlled.

A TTI having a time length of 1 ms may be referred to as an ordinary TTI (TTI in LTE Rel. 8-12), a normal TTI, a long TTI, an ordinary subframe, a normal subframe, a long subframe, a slot, and the like. A TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, and the like) may be read as meaning a TTI having a time length exceeding 1 ms, and a short TTI (for example, shortened TTI) may be read as meaning a TTI having a TTI length of less than a TTI length of a long TTI and a TTI length of 1 ms or more.

A resource block (RB) is a resource allocation unit in the time domain and the frequency domain, and may include one or more consecutive subcarriers in the frequency domain. The number of subcarriers included in the RB may be the same regardless of the numerology, and may be 12, for example. The number of subcarriers included in the RB may be determined based on the numerology.

Further, the time domain of an RB may include one or more symbols, and may have a length of 1 slot, 1 minislot, 1 subframe, or 1 TTI. Each TTI, subframe, or the like may be composed of one or more resource blocks.

Note that, one or more RBs may be called a physical resource block (PRB), a subcarrier group (SCG), a resource element group (REG), a PRB pair, a RB pair, and the like.

A resource block may be configured by one or more resource elements (REs). For example, one RE may be a radio resource domain of one subcarrier and one symbol.

A bandwidth part (BWP) (which may be called a partial bandwidth or the like) may represent a subset of consecutive common resource blocks (RBs) for a certain numerology in a certain carrier. Here, the common RB may be specified by an index of the RB based on the common reference point of the carrier. A PRB may be defined in a certain BWP and numbered within that BWP.

A BWP may include a BWP for UL (UL BWP) and a BWP for DL (DL BWP). One or more BWPs may be configured in one carrier for the UE.

At least one of the configured BWPs may be active, and the UE does not have to expect to transmit and receive predetermined signals/channels outside the active BWP. Note that "cell", "carrier", and the like in this disclosure may be read as meaning "BWP".

The above-described structures such as a radio frame, a subframe, a slot, a minislot, and a symbol are merely examples. For example, structures such as the number of subframes included in a radio frame, the number of slots per subframe or radio frame, the number of minislots included in a slot, the number of symbols and RBs included in a slot or minislot, the number of subcarriers included in RBs, and the number of symbols included in a TTI, a symbol length, the cyclic prefix (CP) length, and the like can be changed in various manner.

The terms "connected", "coupled", or any variations thereof mean any direct or indirect connection or coupling between two or more elements, and can include that one or more intermediate elements are present between two elements that are "connected" or "coupled" to each other. The coupling or connection between the elements may be physical, logical, or a combination thereof. For example, "connection" may be read as meaning "access". In the present disclosure, two elements can be "connected" or "coupled" to each other by using at least one of one or more wires, one or more cables, and one or more printed electrical connections, and as some non-limiting and non-exhaustive examples, by using electromagnetic energy having wavelengths in the radio frequency domain, a microwave region, and a light (both visible and invisible) region, and the like.

A reference signal may be abbreviated as RS and may be called a pilot according to applicable standards.

As used in the present disclosure, the phrase "based on" does not mean "based only on" unless explicitly stated otherwise. In other words, the phrase "based on" means both "based only on" and "based at least on".

"Means" in the configuration of each device above may be replaced with "unit", "circuit", "device", and the like.

Any reference to elements using a designation such as "first", "second", or the like used in the present disclosure generally does not limit the amount or order of those elements. Such designations can be used in the present disclosure as a convenient method to distinguish between two or more elements. Thus, the reference to the first and second elements does not imply that only two elements can be adopted, or that the first element has to precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive-OR.

Throughout the present disclosure, for example, during translation, if articles such as a, an, and the in English are added, the present disclosure may include that a noun following these articles is used in plural.

As used in this disclosure, the term "determining" may encompass a wide variety of actions. "determining" includes deeming that determining has been performed by, for example, judging, calculating, computing, processing, deriving, investigating, searching (looking up, search, inquiry) (for example, searching in a table, database, or another data structure), ascertaining, and the like. In addition, "determining" can include deeming that determining has been performed by receiving (for example, receiving information), transmitting (for example, transmitting information), inputting (input), outputting (output), access (accessing) (for example, accessing data in a memory), and the like. In addition, "determining" can include deeming that determining has been performed by resolving, selecting, choosing, establishing, comparing, and the like. That is, "determining" may include deeming that "determining" regarding some action has been performed. Moreover, "determining" may be read as meaning "assuming", "expecting", "considering", and the like.

In the present disclosure, the wording "A and B are different" may mean "A and B are different from each other". It should be noted that the wording may mean "A and B are each different from C". Terms such as "separate", "couple", or the like may also be interpreted in the same manner as "different".

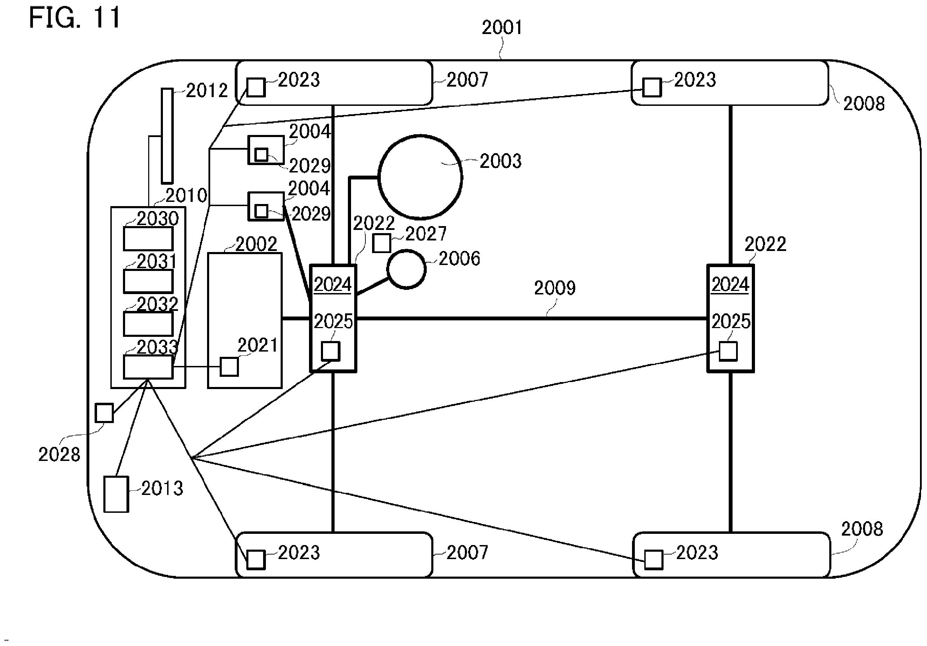

FIG. 11 shows a configuration example of a vehicle 2001. As shown in FIG. 11, the vehicle 2001 includes a drive 2002, a steering 2003, an accelerator pedal 2004, a brake pedal 2005, a shift lever 2006, left and right front wheels 2007, left and right rear wheels 2008, an axle 2009, an electronic controller 2010, various sensors 2021 to 2029, an information service unit 2012, and a communication module 2013.

Examples of the drive 2002 include, an engine, a motor, and a hybrid of an engine and a motor.

The steering 2003 includes at least a steering wheel (also called a handle) and steers at least one of the front and rear wheels based on an operation of a steering wheel operated by a user.

The electronic controller 2010 includes a microprocessor 2031, a memory (ROM, RAM) 2032, and a communication port (IO port) 2033. The electronic controller 2010 receives signals from various sensors 2021 to 2027 provided in the vehicle. The electronic controller 2010 may be called an ECU (Electronic Control Unit).

The signals from the various sensors 2021 to 2028 include a current signal from a current sensor 2021 for sensing current of a motor, a rotation speed signal of a front wheel and a rear wheel acquired by the speed sensor 2022, a pressure signal of a front wheel and a rear wheel acquired by an air pressure sensor 2023, a speed signal of a vehicle acquired by a speed sensor 2024, an acceleration signal acquired by an acceleration sensor 2025, an accelerator pedal pressed-amount signal acquired by an accelerator pedal sensor 2029, a brake pedal pressed-amount signal acquired by a brake pedal sensor 2026, an operation signal of the shift lever acquired by a shift lever sensor 2027, and a detection signal acquired by an object detection sensor 2028 for detecting obstacles, vehicles, pedestrians, and the like.

The information service unit 2012 includes various devices such as a car navigation system, an audio system, a speaker, a television, and a radio for providing various information such as driving information, traffic information, and entertainment information, and one or more ECUs for controlling these devices. The information service unit 2012 provides various multimedia information and multimedia services to an occupant of the vehicle 1 by using information acquired from an external device through a communication module 2013 and the like.

A driver support system unit 2030 comprises various devices such as a millimeter wave radar, a light detection and ranging (LiDAR), a camera, a positioning locator (for example, GNSS), map information (for example, highdefinition (HD) maps, autonomous vehicle (AV) maps, and the like), a gyroscopic system (for example, an inertial measurement unit (IMU), an inertial navigation system (INS), and the like), an artificial intelligence (AI) chip, and an AI processor for providing functions to prevent accidents or reduce a driving load of a driver, and one or more ECUs for controlling these devices. Further, the driver support system unit 2030 transmits and receives various kinds of information through the communication module 2013 to realize a driver support function or an automatic driving function.

The communication module 2013 can communicate with the microprocessor 2031 and components of the vehicle 1 through a communication port. For example, the communication module 2013 transmits and receives data through the communication port 2033 to and from the drive 2002, steering 2003, accelerator pedal 2004, brake pedal 2005, shift lever 2006, left and right front wheels 2007, left and right rear wheels 2008, axle 2009, microprocessor 2031 in the electronic control 2010, memory (ROM, RAM) 2032, and sensor 2021 to 2028.

The communication module 2013 is a communication device that can be controlled by the microprocessor 2031 of the electronic controller 2010 and can communicate with an external device. For example, The communication module 2013 transmits and receives various kinds of information via radio communication with the external device. The communication module 2013 may be placed inside or outside the electronic control unit 2010. Examples of the external device may include a base station, a mobile station, and the like.

The communication module 2013 transmits a current signal coming from a current sensor and input to the electronic controller 2010 to an external device via radio communication. Further, the communication module 2013 transmits a rotation speed signal of a front wheel and a rear wheel acquired by the speed sensor 2022, a pressure signal of a front wheel and a rear wheel acquired by an air pressure sensor 2023, a speed signal of a vehicle acquired by a speed sensor 2024, an acceleration signal acquired by an acceleration sensor 2025, an accelerator pedal pressed-amount signal acquired by an accelerator pedal sensor 2029, a brake pedal pressed-amount signal acquired by a brake pedal sensor 2026, an operation signal of the shift lever acquired by a shift lever sensor 2027, and a detection signal acquired by an object detection sensor 2028 for detecting obstacles, vehicles, pedestrians, and the like input to the electronic controller 2010 to an external device via radio communication.

The communication module 2013 receives various information (traffic information, signal information, intervehicle information, and the like.) transmitted from the external device and displays on the information service unit 2012 provided in the vehicle. Further, the communication module 2013 stores various information received from the external device in a memory 2032 usable by the microprocessor 2031. Based on the information stored in the memory 2032, the microprocessor 2031 may control the drive 2002, the steering 2003, the accelerator pedal 2004, the brake pedal 2005, the shift lever 2006, the left and right front wheels 2007, the left and right rear wheels 2008, the axle 2009, the sensors 2021 to 2028, and the like. provided in the vehicle 2001.

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Appended Note

The foregoing disclosure may be expressed as follows.

A first feature is a terminal, including a communication unit that executes intermittent communication in which communication is executed in a periodic first section, and communication is not executed in a second section other than the first section; and a control unit that controls the intermittent communication; in which the intermittent communication includes at least one of first specific communication in which uplink communication is not limited and downlink communication is limited in the first section, and second specific communication in which downlink communication is not limited and uplink communication is limited in the first section.

A second feature is a terminal in which, in the first feature, specific downlink communication is allowed in the first specific communication.

A third feature is a terminal in which, in the first feature or the second feature, specific uplink communication is allowed in the second specific communication.

A fourth feature is a base station including: a communication unit that executes intermittent communication in which communication is executed in a periodic first section, and communication is not executed in a second section other than the first section; and a control unit that assumes that the terminal executes the intermittent communication; in which the intermittent communication includes at least one of first specific communication in which uplink communication is not limited and downlink communication is limited in the first section, and second specific communication in which downlink communication is not limited and uplink communication is limited in the first section.

A fifth feature is a radio communication device including a terminal and a base station, the terminal including: a communication unit that executes intermittent communication in which communication is executed in a periodic first section, and communication is not executed in a second section other than the first section; and a control unit that controls the intermittent communication; in which the intermittent communication includes at least one of first specific communication in which uplink communication is not limited and downlink communication is limited in the first section, and second specific communication in which downlink communication is not limited and uplink communication is limited in the first section.

A sixth feature is a radio communication method including: a step of executing intermittent communication in which communication is executed in a periodic first section, and communication is not executed in a second section other than the first section; and a step of controlling the intermittent communication; in which the intermittent communication includes at least one of first specific communication in which uplink communication is not limited and downlink communication is limited in the first section, and second specific communication in which downlink communication is not limited and uplink communication is limited in the first section.

### Reference Signs List

10 Radio communication system
20 NG-RAN
100 gNB
110 Reception unit
120 Transmission unit
130 Control unit
200 UE
210 Radio signal transmission and reception unit
220 Amplifier unit
230 Modulation and demodulation unit
240 Control signal and reference signal processing unit
250 Encoding/decoding unit
260 Data transmission and reception unit
270 Control unit
1001 Processor
1002 Memory
1003 Storage
1004 Communication device
1005 Input device
1006 Output device
1007 Bus
2001 Vehicle
2002 Drive unit
2003 Steering unit
2004 Axel pedal
2005 Brake pedal
2006 Shift lever
2007 Left and right front wheels
2008 Left and right rear wheels
2009 Axles
2010 Electronic control unit
2012 Information service unit
2013 Communication module
2021 Current sensor
2022 Rotational speed sensor
2023 Air pressure sensor
2024 Vehicle speed sensor
2025 Acceleration sensor
2026 Brake pedal sensor
2027 Shift lever sensor
2028 Object detection sensor
2029 Axel pedal sensor
2030 Operation support system unit
2031 Microprocessor
2032 Memory (ROM, RAM)
2033 Communication port

## Claims

1. A terminal, comprising:
a communication unit that executes intermittent communication in which communication is executed in a periodic first section, and communication is not executed in a second section other than the first section; and
a control unit that controls the intermittent communication;
wherein the intermittent communication includes at least one of first specific communication in which uplink communication is not limited and downlink communication is limited in the first section, and second specific communication in which downlink communication is not limited and uplink communication is limited in the first section.

2. The terminal according to claim 1, wherein specific downlink communication is allowed in the first specific communication.

3. The terminal according to claim 1, wherein specific uplink communication is allowed in the second specific communication.

4. A base station comprising:
a communication unit that executes intermittent communication in which communication is executed in a periodic first section, and communication is not executed in a second section other than the first section; and
a control unit that assumes that the terminal executes the intermittent communication;
wherein the intermittent communication includes at least one of first specific communication in which uplink communication is not limited and downlink communication is limited in the first section, and second specific communication in which downlink communication is not limited and uplink communication is limited in the first section.

5. A radio communication device comprising a terminal and a base station, the terminal comprising:
a communication unit that executes intermittent communication in which communication is executed in a periodic first section, and communication is not executed in a second section other than the first section; and
a control unit that controls the intermittent communication;
wherein the intermittent communication includes at least one of first specific communication in which uplink communication is not limited and downlink communication is limited in the first section, and second specific communication in which downlink communication is not limited and uplink communication is limited in the first section.

6. A radio communication method comprising:
a step of executing intermittent communication in which communication is executed in a periodic first section, and communication is not executed in a second section other than the first section; and
a step of controlling the intermittent communication;
wherein the intermittent communication includes at least one of first specific communication in which uplink communication is not limited and downlink communication is limited in the first section, and second specific communication in which downlink communication is not limited and uplink communication is limited in the first section.
